# EUROPEAN PATENT APPLICATION

(11) **EP 4 757 148 A2**
(43) Date of publication of application: **10.06.2026**
(21) Application number: 26171052.9
(22) Date of filing: 22.12.2023
(51) Int. Cl.: H02K 16/02

(54) **ELECTRIC AIRCRAFT PROPULSION UNIT(S) WITH MULTIPLE PROPULSOR ROTORS**

(30) Priority: 23.12.2022 US 202218088249
(62) Divisional of application: 23219866.3
(71) Applicant: Pratt & Whitney Canada Corp., Longueuil, Québec J4G 1A1 (CA)
(72) Inventor: BOUSQUET, Michel, (01BE5) Longueuil, J4G 1A1 (CA); NGUYEN, Kevin, (01BE5) Longueuil, J4G 1A1 (CA)
(74) Representative: Dehns

(57) **Abstract**

An aircraft system (20) includes a first propulsor rotor (28) rotatable about an axis (38), and a second propulsor rotor (30) rotatable about the axis (38). An electric machine (32) includes a first electric machine rotor (42), a second electric machine rotor (44) and an electric machine stator (46) radially between the first electric machine rotor (42) and the second electric machine rotor (44). The first electric machine rotor (42) is rotatable about the axis (38) and rotatably connected to the first propulsor rotor (28). The first electric machine rotor (42) and the electric machine stator (46) form a first motor (72) configured to drive rotation of the first propulsor rotor (28). The second electric machine rotor (44) is rotatable about the axis (38) and rotatably connected to the second propulsor rotor (30). The second electric machine rotor (44) and the electric machine stator (46) form a second motor (74) configured to drive rotation of the second propulsor rotor (30).

## Description

### TECHNICAL FIELD

This invention relates generally to an aircraft and, more particularly, to a propulsion unit for the aircraft with multiple propulsor rotors.

### BACKGROUND INFORMATION

Various types and configurations of propulsion systems are known in the art for an aircraft. In an effort to reduce emissions and/or increase efficiency, some efforts have been focused to provide propulsion systems with electric motors capable of driving propulsion system propulsor(s). While known propulsion systems with electric motors have various benefits, there is still room in the art for improvement.

### SUMMARY

According to an aspect of the invention, an aircraft system is provided that includes a first propulsor rotor, a second propulsor rotor and an electric machine. The first propulsor rotor is rotatable about an axis. The second propulsor rotor is rotatable about the axis. The electric machine includes a first electric machine rotor, a second electric machine rotor and an electric machine stator radially between the first electric machine rotor and the second electric machine rotor. The first electric machine rotor is rotatable about the axis and rotatably connected to the first propulsor rotor. The first electric machine rotor and the electric machine stator form a first motor configured to drive rotation of the first propulsor rotor. The second electric machine rotor are rotatable about the axis and rotatably connected to the second propulsor rotor. The second electric machine rotor and the electric machine stator form a second motor configured to drive rotation of the second propulsor rotor.

According to another aspect of the invention, another aircraft system is provided that includes a propulsion unit and a power source discrete from the propulsion unit. The propulsion unit includes a first propulsor rotor, a second propulsor rotor, a first motor and a second motor. The first propulsor rotor is rotatable about an axis. The second propulsor rotor is rotatable about the axis. The first motor includes a first rotor and a stator that circumscribes and extends axially along the first rotor. The first motor is configured to drive rotation of the first propulsor rotor. The second motor includes the stator and a second rotor that circumscribes and extends axially along the stator. The second motor is configured to drive rotation of the second propulsor rotor. The power source is electrically coupled to and configured to electrically power the first motor and the second motor.

According to still another aspect of the invention, another aircraft system is provided that includes a fuselage, a wing, a plurality of propulsion units and a power source. The wing is connected to and projects out from the fuselage. The propulsion units are mounted to the wing. Each of the propulsion units includes a first propulsor rotor, a second propulsor rotor, a first motor and a second motor. The first propulsor rotor is rotatable about an axis. The second propulsor rotor is rotatable about the axis. The first motor is coupled to and configured to drive rotation of the first propulsor rotor. The second motor is coupled to and configured to drive rotation of the second propulsor rotor. The power source is mounted to the wing and electrically coupled to the first motor and the second motor of each of the propulsion units. The power source is spaced from a first of the propulsion units spanwise along the wing.

The following optional features may be applied individually, or in any combination, to any of the above aspects of the invention.

The aircraft system may also include a thermal engine configured to power the first motor and the second motor through the power source.

The first motor may be configured to drive rotation of the first propulsor rotor in a first direction about the axis. The second motor may be configured to drive rotation of the second propulsor rotor in a second direction about the axis that is opposite the first direction.

The first motor may be configured to drive rotation of the first propulsor rotor in a first direction about the axis. The second motor may be configured to drive rotation of the second propulsor rotor in the first direction about the axis.

The electric machine stator may circumscribe the first electric machine rotor. The second electric machine rotor may circumscribe the electric machine stator.

The second propulsor rotor may be arranged axially between the first propulsor rotor and the electric machine.

The second propulsor rotor may be arranged axially between the first propulsor rotor and the first motor.

The electric machine stator may extend axially along the first electric machine rotor and the second electric machine rotor.

The second electric machine rotor may axially overlap the first electric machine rotor.

The aircraft system may also include a power source electrically coupled to the electric machine and configured to power the first motor and the second motor.

The power source may include: one or more power storage devices; and/or one or more electrical generators.

The aircraft system may also include an aircraft fuselage, an aircraft wing and a propulsion unit. The aircraft fuselage may house the power source. The aircraft wing may project out from the aircraft fuselage. The propulsion unit may include the first propulsor rotor, the second propulsor rotor and the electric machine. The propulsion unit may be mounted to the aircraft wing.

The aircraft system may also include a powerplant configured to power the electric machine through the power source. The powerplant may be housed within the fuselage.

The powerplant may be configured as or otherwise include a thermal engine.

The aircraft system may also include an aircraft fuselage, an aircraft wing and a propulsion unit. The aircraft wing may project out from the aircraft fuselage. The propulsion unit may include the first propulsor rotor, the second propulsor rotor and the electric machine. The propulsion unit may be mounted to the aircraft wing. The power source may be mounted to the aircraft wing.

The aircraft system may also include a powerplant configured to power the electric machine through the power source. The powerplant may be mounted to the aircraft wing.

The powerplant may be configured as or otherwise include a thermal engine.

The first propulsor rotor may be a first un-ducted rotor. In addition or alternatively, the second propulsor rotor may be a second un-ducted rotor.

The first propulsor rotor may be a first ducted rotor. In addition or alternatively, the second propulsor rotor may be a second ducted rotor.

The aircraft system may also include a first propulsion unit, a second propulsion unit and a power source. The first propulsion unit may include the first propulsor rotor, the second propulsor rotor and the electric machine. T second propulsion unit may be discrete from the first propulsion unit. The second propulsion unit may include a second electric machine. The power source may be electrically coupled to the electric machine and the second electric machine. The power source may be configured to power the first propulsion unit and the second propulsion unit.

The present invention may include any one or more of the individual features disclosed above and/or below alone or in any combination thereof.

The foregoing features and the operation of the invention will become more apparent in light of the following description and the accompanying drawings.

### CLAUSES DEFINING SOME ASPECTS AND EMBODIMENTS OF THE INVENTION

1. An aircraft system (20), comprising:
   a first propulsor rotor (28) rotatable about an axis (38);
   a second propulsor rotor (30) rotatable about the axis (38); and
   an electric machine (32) including a first electric machine rotor (42), a second electric machine rotor (44) and an electric machine stator (46) radially between the first electric machine rotor (42) and the second electric machine rotor (44);
   the first electric machine rotor (42) rotatable about the axis (38) and rotatably connected to the first propulsor rotor (28), and the first electric machine rotor (42) and the electric machine stator (46) forming a first motor (72) configured to drive rotation of the first propulsor rotor (28); and
   the second electric machine rotor (44) rotatable about the axis (38) and rotatably connected to the second propulsor rotor (30), and the second electric machine rotor (44) and the electric machine stator (46) forming a second motor (74) configured to drive rotation of the second propulsor rotor (30).
2. The aircraft system (20) of clause 1, wherein:
   the first motor (72) is configured to drive rotation of the first propulsor rotor (28) in a first direction about the axis (38); and
   the second motor (74) is configured to drive rotation of the second propulsor rotor (30) in a second direction about the axis (38) that is opposite to the first direction.
3. The aircraft system (20) of clause 1, wherein:
   the first motor (72) is configured to drive rotation of the first propulsor rotor (28) in a first direction about the axis (38); and
   the second motor (74) is configured to drive rotation of the second propulsor rotor (30) in the first direction about the axis (38).
4. The aircraft system (20) of any preceding clause, wherein:
   the electric machine stator (46) circumscribes the first electric machine rotor (42); and
   the second electric machine rotor (44) circumscribes the electric machine stator (46).
5. The aircraft system (20) of any preceding clause, wherein:
   the second propulsor rotor (30) is arranged axially between the first propulsor rotor (28) and the electric machine (32); or
   the second propulsor rotor (30) is arranged axially between the first propulsor rotor (28) and the first motor (72).
6. The aircraft system (20) of any preceding clause, wherein the electric machine stator (46) extends axially along the first electric machine rotor (42) and the second electric machine rotor (44).
7. The aircraft system (20) of any preceding clause, wherein the second electric machine rotor (44) axially overlaps the first electric machine rotor (42).
8. The aircraft system (20) of any preceding clause, further comprising a power source (24) electrically coupled to the electric machine (32) and configured to power the first motor (72) and the second motor (74), optionally wherein the power source (24) comprises:
   one or more power storage devices (86); and/or
   one or more electrical generators.
9. The aircraft system (20) of clause 8, further comprising:
   an aircraft fuselage (130) housing the power source (24);
   an aircraft wing (132) projecting out from the aircraft fuselage (130);
   a first propulsion unit (22) including the first propulsor rotor (28), the second propulsor rotor (30) and the electric machine (32), the first propulsion unit (22) mounted to the aircraft wing (132).
10. The aircraft system of clause 9, further comprising a powerplant (26) configured to power the electric machine (32) through the power source (24), the powerplant (26) housed within the fuselage.
11. The aircraft system (20) of clause 8, further comprising:
   an aircraft fuselage (130);
   an aircraft wing (132) projecting out from the aircraft fuselage (130); and
   a first propulsion unit (22) including the first propulsor rotor (28), the second propulsor rotor (30) and the electric machine (32), the first propulsion unit (22) mounted to the aircraft wing (132), wherein the power source (24) is mounted to the aircraft wing (132); and optionally
   a powerplant (26) configured to power the electric machine (32) through the power source (24), the powerplant (26) mounted to the aircraft wing (132).
12. The aircraft system (20) of any preceding clause, wherein:
   the first propulsor rotor (28) is a first un-ducted, or ducted, rotor; and/or
   the second propulsor rotor (30) is a second un-ducted, or ducted, rotor.
13. The aircraft system (20) of any preceding clause, further comprising:
   a or the first propulsion unit (22) including the first propulsor rotor (28), the second propulsor rotor (30) and the electric machine (32);
   a second propulsion unit (22) discrete from the first propulsion unit (22), the second propulsion unit (22) comprising a second electric machine (32); and
   a or the power source (24) electrically coupled to the electric machine (32) and the second electric machine (32), the power source (24) configured to power the first propulsion unit (22) and the second propulsion unit (22).
14. An aircraft system (20) comprising:
   a propulsion unit (22) including a first propulsor rotor (28), a second propulsor rotor (30), a first motor (72) and a second motor (74), wherein:
      the first propulsor rotor (28) is rotatable about an axis (38);
      the second propulsor rotor (30) is rotatable about the axis (38);
      the first motor (72) includes a first rotor (42) and a stator (46) that circumscribes and extends axially along the first rotor (42), the first motor (72) configured to drive rotation of the first propulsor rotor (28); and
      the second motor (74) includes the stator (46) and a second rotor (44) that circumscribes and extends axially along the stator (46), the second motor (74) configured to drive rotation of the second propulsor rotor (30); and
   a power source (24) discrete from the propulsion unit (22), the power source (24) electrically coupled to and configured to electrically power the first motor (72) and the second motor (74), and optionally:
      a thermal engine configured to power the first motor (72) and the second motor (74) through the power source (24).
15. An aircraft system (20) comprising:
   a fuselage (130);
   a wing (132) connected to and projecting out from the fuselage (130);
   a plurality of propulsion units (22) mounted to the wing, each of the plurality of propulsion units (22) including:
      a first propulsor rotor (28) rotatable about an axis (38);
      a second propulsor rotor (30) rotatable about the axis (38);
      a first motor (72) coupled to and configured to drive rotation of the first propulsor rotor (28); and
      a second motor (74) coupled to and configured to drive rotation of the second propulsor rotor (30); and
   a power source (24) mounted to the wing (132) and electrically coupled to the first motor (72) and the second motor (74) of each of the plurality of propulsion units (22), and the power source (24) spaced from a first of the plurality of propulsion units (22) spanwise along the wing (132).

### BRIEF DESCRIPTION OF THE DRAWINGS

FIG. 1 is a schematic illustration of an aircraft system.
FIG. 2A is a cross-sectional illustration of an electric machine.
FIG. 2B is a partial schematic sectional illustration of the electric machine of FIG. 2A taken along line 2B-2B in FIG. 2A.
FIG. 3 is a schematic sectional illustration of a gas turbine engine.
FIGS. 4-6 are schematic illustrations of an aircraft with various arrangements of multiple multi-rotor propulsor units.
FIG. 7 is a schematic illustration of a propulsion unit.

### DETAILED DESCRIPTION

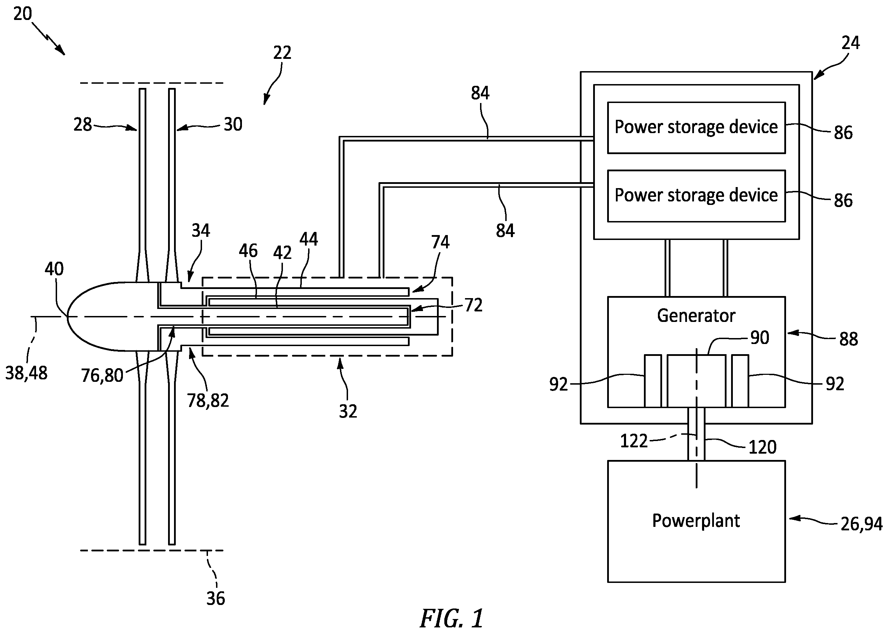

FIG. 1 illustrates a system 20 for an aircraft such as an airplane. This aircraft system 20 may be configured as or otherwise include a propulsion system for the aircraft. The aircraft system 20 of FIG. 1, for example, includes an electric propulsion unit 22, a power source 24 and a powerplant 26.

The propulsion unit 22 includes a first propulsor rotor 28, a second propulsor rotor 30 and an electric machine 32. The propulsion unit 22 also includes a drivetrain system 34 operatively connecting the electric machine 32 independently to the first propulsor rotor 28 and the second propulsor rotor 30.

The first propulsor rotor 28 and the second propulsor rotor 30 are each configured as or otherwise include a bladed rotor. Each propulsor rotor 28, 30 may be an open rotor (e.g., an un-ducted rotor) such as a propeller rotor for a propeller propulsion system. Other examples of the open rotor include a propulsor rotor for a propfan propulsion system or a propulsor rotor for a pusher fan propulsion system. The present disclosure, however, is not limited to such exemplary open rotors nor to open rotor propulsion systems. Each propulsor rotor 28, 30, for example, may alternatively be a ducted rotor such as a fan rotor for a fan propulsion system. In such embodiments, the first propulsor rotor 28 and the second propulsor rotor 30 are each housed within a duct such as a fan duct; e.g., see dashed line 36 in FIG. 1.

The first propulsor rotor 28 and the second propulsor rotor 30 are each rotatable about a common (the same) rotational axis 38, which rotational axis 38 may be an axial centerline of the respective propulsor rotor 28, 30. The first propulsor rotor 28 may be configured to rotate in a first direction (e.g., a clockwise or counterclockwise direction) about the rotational axis 38. The second propulsor rotor 30 may be configured to rotate in a second direction (e.g., a counterclockwise or clockwise direction) about the rotational axis 38, which second direction is opposite from the first direction. With such an arrangement, the first propulsor rotor 28 and the second propulsor rotor 30 are arranged as contra-rotating propulsor rotors. The present disclosure, however, is not limited to such an exemplary arrangement. The first propulsor rotor 28 and the second propulsor rotor 30, for example, may alternatively be configured to rotate in a common (the same) direction about the rotational axis 38. With such an arrangement, the first propulsor rotor 28 and the second propulsor rotor 30 are arranged as co-rotating propulsor rotors.

The first propulsor rotor 28 and the second propulsor rotor 30 of FIG. 1 are arranged at (e.g., on, adjacent or proximate) an axial forward and/or upstream end 40 of the propulsion unit 22. With this arrangement, the first propulsor rotor 28 of FIG. 1 is arranged forward and/or upstream of the second propulsor rotor 30 relative to a forward flight direction of the aircraft and/or a flow direction of air across the propulsor rotors 28 and 30. This first propulsor rotor 28 may thereby be referred to as a forward and/or upstream propulsor rotor. The second propulsor rotor 30 of FIG. 1, on the other hand, is arranged aft and/or downstream of the first propulsor rotor 28 relative to the forward flight direction of the aircraft and/or the flow direction of air across the propulsor rotors 28 and 30. This second propulsor rotor 30 may thereby be referred to as an aft and/or downstream propulsor rotor. The present disclosure, however, is not limited to such an exemplary arrangement. The first propulsor rotor 28 and the second propulsor rotor 30, for example, may alternatively be arranged at an aft and/or downstream end of the propulsion unit 22 (e.g., for a propfan or a pusher fan application) such that the second propulsor rotor 30 is forward and/or upstream of the first propulsor rotor 28; e.g., the orientation of the propulsion unit 22 of FIG. 1 may be reversed.

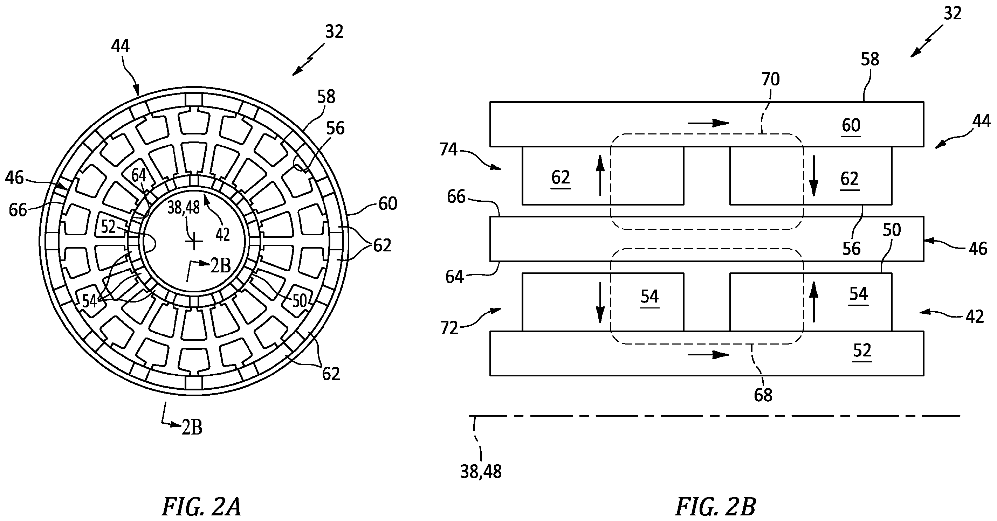

Referring to FIGS. 2A and 2B, the electric machine 32 includes a first electric machine rotor 42 ("first machine rotor"), a second electric machine rotor 44 ("second machine rotor") and an electric machine stator 46. The first machine rotor 42 and the second machine rotor 44 are each rotatable about a common (the same) rotational axis 48, which rotational axis 48 may be an axial centerline of one or more of the electric machine members 42, 44 and/or 46 and/or an axial centerline of the entire electric machine 32. This rotational axis 48 may also be coaxial with the rotational axis 38.

Referring to FIG. 2B, the first machine rotor 42 extends axially along the rotational axis 38, 48. The first machine rotor 42 extends radially to an outer side 50 of the first machine rotor 42. The first machine rotor 42 extends circumferentially about (e.g., completely around) the rotational axis 38, 48. The first machine rotor 42 includes a first (e.g., tubular, or cylindrical) hub 52 and one or more first permanent magnets 54 distributed circumferentially about the first hub 52 and the rotational axis 38, 48 in an array. Each of these first permanent magnets 54 is disposed at the first machine rotor outer side 50. Each of the first permanent magnets 54 is fixed to the first hub 52.

The second machine rotor 44 extends axially along the rotational axis 38, 48. The second machine rotor 44 of FIG. 2B also extends axially along (e.g., at least partially or completely overlapping) the first machine rotor 42. The second machine rotor 44 extends radially between and to an inner side 56 of the second machine rotor 44 and an outer side 58 of the second machine rotor 44. The second machine rotor inner side 56 is disposed radially opposite (e.g., faces) and spaced radially from the first machine rotor outer side 50. The second machine rotor 44 extends circumferentially about (e.g., completely around) the rotational axis 38, 48. The second machine rotor 44 also extends circumferentially about (e.g., circumscribes) the first machine rotor 42. The second machine rotor 44 includes a second (e.g., tubular) hub 60 and one or more second permanent magnets 62 distributed circumferentially about the rotational axis 38, 48 in an annular array. Each of these second permanent magnets 62 is disposed at the second machine rotor inner side 56, where the second hub 60 is radially outward of and circumscribes the array of the second permanent magnets 62. Each of the second permanent magnets 62 is fixed to the second hub 60.

The machine stator 46 is arranged radially between the first machine rotor 42 and the second machine rotor 44. This machine stator 46 extends axially along the rotational axis 38, 48. The machine stator 46 of FIG. 2B also extend axially along (e.g., at least partially or completely overlapping) the first machine rotor 42 and the second machine rotor 44. The machine stator 46 extends radially between and to an inner side 64 of the machine stator 46 and an outer side 66 of the machine stator 46. The machine stator inner side 64 is disposed radially opposite (e.g., faces) and (e.g., slightly) spaced from the first machine rotor outer side 50. The machine stator outer side 66 is disposed radially opposite (e.g., faces) and (e.g., slightly) spaced from the second machine rotor inner side 56. The machine stator 46 is configured as or otherwise includes one or more electrical coils distributed circumferentially about the rotational axis 38, 48.

During operation, the machine stator 46 is configured to (a) induce a first electromagnetic field 68 with the first machine rotor 42 and its first permanent magnets 54 and (b) induce a second electromagnetic field 70 with the second machine rotor 44 and its second permanent magnets 62. The electromagnetic interaction between the electric machine members 42 and 46, 44 and 46 drives the first machine rotor 42 and the second machine rotor 44 to rotate in opposite directions (or alternatively, in the same direction) about the rotational axis 38, 48. The first machine rotor 42 and the machine stator 46 may thereby form a first electric motor 72 ("first motor) configured to mechanically power the first propulsor rotor 28 of FIG. 1. The second machine rotor 44 and the (same) machine stator 46 may similarly form a second electric motor 74 ("second motor") configured to mechanically power the second propulsor rotor 30 of FIG. 1.

The drivetrain system 34 of FIG. 1 includes a first drivetrain 76 and a second drivetrain 78. The first drivetrain 76 is configured to operatively connect the electric machine 32 and its first motor 72 to the first propulsor rotor 28. The first drivetrain 76 of FIG. 1, for example, at least (or only) includes a first driveshaft 80 extending axially between and coupled to the first propulsor rotor 28 and the first machine rotor 42. The first driveshaft 80 thereby rotatably connects the first machine rotor 42 to the first propulsor rotor 28 such that the electric machine 32 and its first motor 72 may drive rotation of the first propulsor rotor 28. Similarly, the second drivetrain 78 is configured to operatively connect the electric machine 32 and its second motor 74 to the second propulsor rotor 30. The second drivetrain 78 of FIG. 1, for example, at least (or only) includes a second driveshaft 82 extending axially between and coupled to the second propulsor rotor 30 and the second machine rotor 44. The second driveshaft 82 thereby rotatably connects the second machine rotor 44 to the second propulsor rotor 30 such that the electric machine 32 and its second motor 74 may drive rotation of the second propulsor rotor 30. The second driveshaft 82 of FIG. 1 circumscribes the first driveshaft 80, and the first driveshaft 80 projects axially through an inner bore of the second driveshaft 82. The present disclosure, however, is not limited to the foregoing exemplary drivetrain system arrangement. For example, in other embodiments, the first drivetrain 76 and/or the second drivetrain 78 may also or alternatively include another power transmission device between the electric machine rotor 42, 44 and the respective propulsor rotor 28, 30.

The second propulsor rotor 30 of FIG. 1 is arranged axially between the first propulsor rotor 28 and the electric machine 32 along the rotational axis 38, 48. More particularly, the second propulsor rotor 30 is arranged axially between the first propulsor rotor 28 and each electric motor 72, 74 and its respective electric machine rotor 42, 44. With the arrangement of propulsion unit members 32 and 34 of FIG. 1, the propulsion unit 22 may be configured with a relatively compact form in both girth and/or length while providing enhanced (e.g., increased) thrust capability with its multiple propulsor rotors 28 and 30.

The power source 24 is configured to provide electrical power (electricity) to the electric machine 32 to power the electric motors 72 and 74. The power source 24 of FIG. 1, for example, is electrically coupled with the electric machine 32 and its machine stator 46 through one or more electrical leads 84; e.g., high voltage lines. The power source 24 may also be configured to store the electrical power. The power source 24, for example, may be configured as or otherwise include one or more power storage devices 86; e.g., batteries. The power source 24 may also or alternatively be configured as or otherwise include an electrical generator 88.

The power source 24 of FIG. 1 includes a combination of the power storage devices 86 and the electrical generator 88. The electrical generator 88 is configured to generate electrical power and provide the electrical power to one or more of the power storage devices 86. The power storage device(s) 86 are configured to store the received electrical power and subsequently provide the stored electrical power to the electric machine 32 (as needed) to power the electric motors 72 and 74. Of course, under certain conditions, it is possible for the power storage device(s) 86 to operate as a passthrough and/or conditioner for transferring the electrical power generated by the electrical generator 88 to the electric machine 32 and its electric motors 72 and 74.

The power storage device(s) 86 of FIG. 1 are electrically coupled between the electric machine 32 and the electrical generator 88. However, in other embodiments, the power source 24 may include a bypass to provide the electrical power from the electrical generator 88 to the electric machine 32 without passing through the power storage devices 86.

The powerplant 26 is configured to mechanically power the electrical generator 88. The powerplant 26 of FIG. 1, for example, is configured to drive rotation of a generator rotor 90 within the electrical generator 88. This generator rotor 90 induces an electromagnetic field with a generator stator 92 to generate the electrical power during rotation of the generator rotor 90.

The powerplant 26 may be configured as any apparatus capable of mechanically driving rotation of the generator rotor 90. The powerplant 26, for example, may be configured as or otherwise include a thermal engine. Examples of the thermal engine include, but are not limited to, a gas turbine engine, a reciprocating piston internal combustion engine and a rotary internal combustion engine. This thermal engine may be configured as a traditional thermal engine, or alternatively as a hybrid-electric thermal engine. In another example, the powerplant 26 may be configured as or otherwise include a fuel cell.

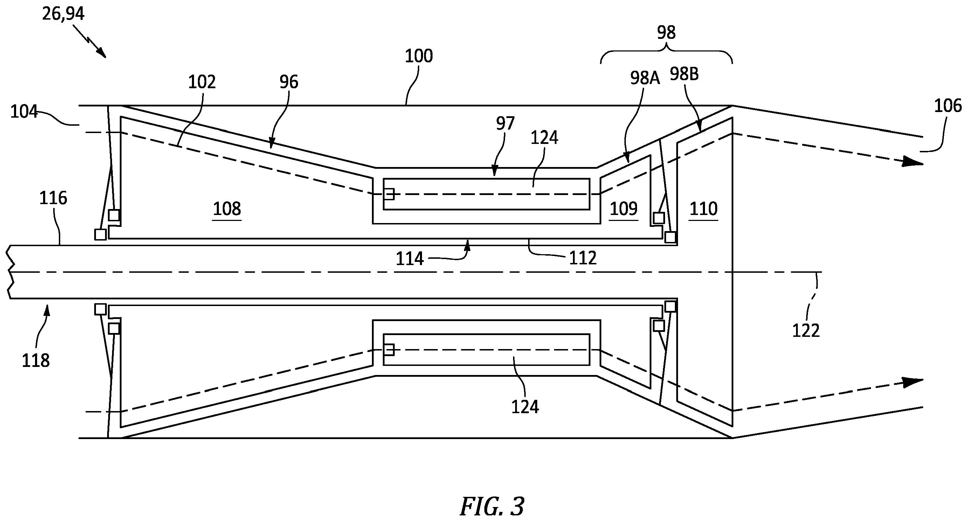

FIG. 3 illustrates an exemplary gas turbine engine 94 for the powerplant 26. This gas turbine engine 94 includes a compressor section 96, a combustor section 97 and a turbine section 98. The turbine section 98 may include a high pressure turbine (HPT) section 98A and a low pressure turbine (LPT) section 98B; e.g., a power turbine section. The gas turbine engine 94 also includes an engine case 100 housing the engine sections 96-98B; e.g., a core of the gas turbine engine 94.

The compressor section 96, the combustor section 97, the HPT section 98A and the LPT section 98B are arranged sequentially along a core flowpath 102 (e.g., an annular flowpath) within the gas turbine engine 94. This flowpath 102 extends within the gas turbine engine 94 from an upstream airflow inlet 104 into the gas turbine engine 94 to a downstream combustion products exhaust 106 from the gas turbine engine 94.

Each of the engine sections 96, 98A and 98B includes a respective bladed rotor 108-110. Each of these bladed rotors 108-110 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The compressor rotor 108 is connected to the HPT rotor 109 through a high speed shaft 112. At least (or only) the compressor rotor 108, the HPT rotor 109 and the high speed shaft 112 may collectively form a high speed rotating structure 114 of the gas turbine engine 94. The LPT rotor 110 is connected to a low speed shaft 116, which low speed shaft 116 may extend axially through a bore of the high speed rotating structure 114 and its high speed shaft 112. At least (or only) the LPT rotor 110 and the low speed shaft 116 may collectively form a low speed rotating structure 118. This low speed rotating structure 118 may be coupled to and rotatable with the generator rotor 90 of FIG. 1 through a powerplant drivetrain 120.

The engine rotating structures 114 and 118 and their shafts 112 and 116 of FIG. 3 are supported by a plurality of bearings. Each of these bearings is connected to the engine case 100 by one or more support structures; e.g., struts, frames, etc. With this arrangement, each of the engine rotating structures 114 and 118 of FIG. 3 is rotatable about a common (or respective) rotational axis 122, which rotational axis 122 may also be an axial centerline of the respective rotating structure 114, 118.

During gas turbine engine 94 operation, air enters the flowpath 102 through the airflow inlet 104 and is directed into the compressor section 96. The air within the flowpath 102 may be referred to as "core air". This core air is compressed by the compressor rotor 108 and directed into a combustion chamber 124 (e.g., an annular chamber) of a combustor within the combustor section 97. The fuel is injected into the combustion chamber 124 by one or more fuel injectors and mixed with the compressed air to provide a fuel-air mixture. This fuel-air mixture is ignited and combustion products thereof flow through and sequentially cause the HPT rotor 109 and the LPT rotor 110 to rotate. The rotation of the HPT rotor 109 drives rotation of the compressor rotor 108 and, thus, compression of the air received from the airflow inlet 104. The rotation of the LPT rotor 110 and, more generally, the low speed rotating structure 118 provides mechanical power for driving (e.g., rotating) the generator rotor 90 of FIG. 1. The present disclosure, however, is not limited to such an exemplary gas turbine engine configuration, nor to gas turbine engines as discussed above. For example, in other embodiments, the low speed rotating structure 118 may also include a compressor rotor. In still other embodiments, the low speed rotating structure 118 may be omitted and the high speed rotating structure 114 may be configured for providing the mechanical power for driving the generator rotor 90 of FIG. 1.

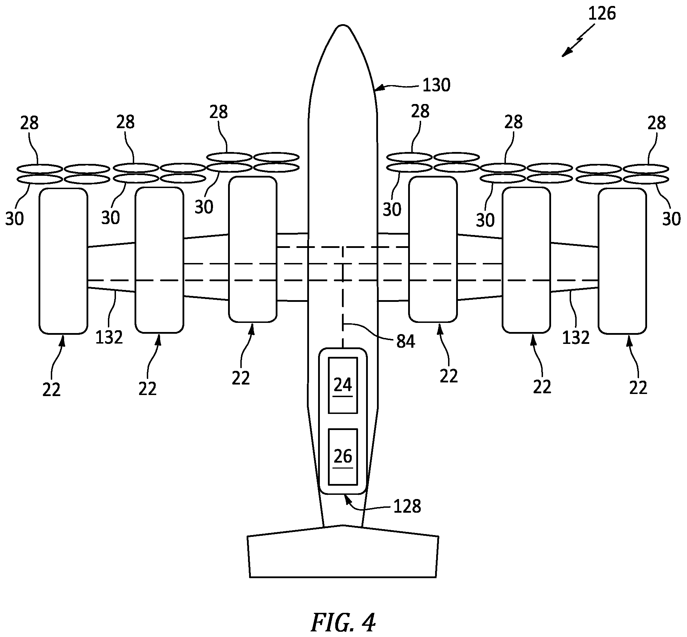

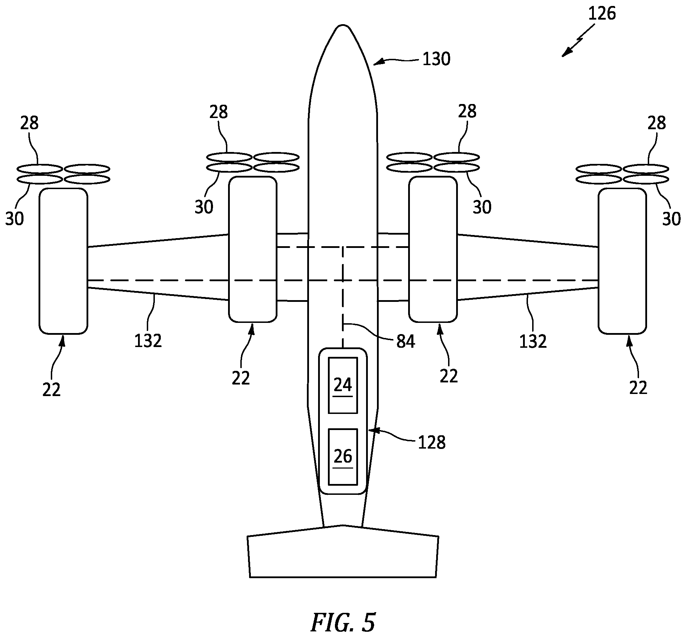

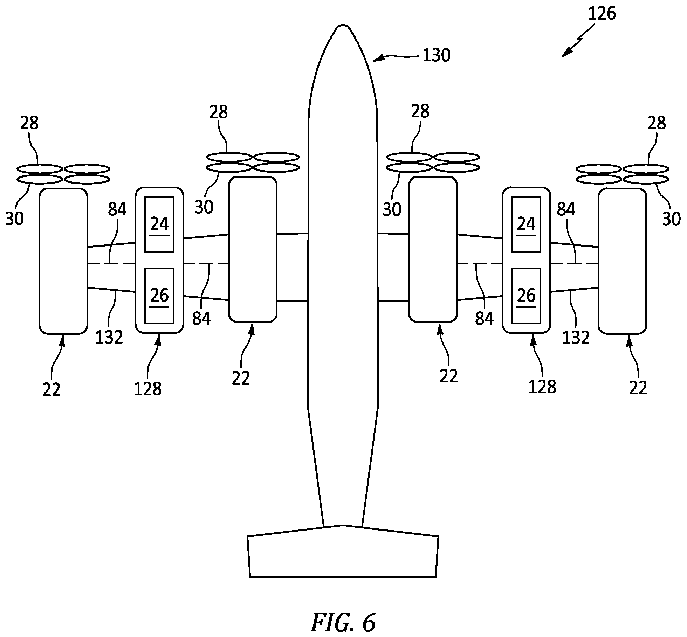

In some embodiments, referring to FIG. 1, the powerplant 26 and the power source 24 may be configured to (e.g., only) service (e.g., power) the single propulsion unit 22. In other embodiments, referring to FIGS. 4-6, the powerplant 26 and the power source 24 may be configured to service multiple of the propulsion units 22. For example, the powerplant 26 and the power source 24 of FIGS. 4 and 5 are configured to facilitate powering each of the propulsion units 22 arranged with the aircraft 126. In another example, referring to FIG. 6, the aircraft 126 includes multiple power units 128. Each power unit 128 includes a respective powerplant 26 and a respective power source 24. Each of these power units 128 is configured to service a respective set of one or more propulsion units 22.

In some embodiments, the propulsion units 22 may be configured to counterrotate. For example, the first propulsor rotor 28 for each propulsion unit 22 disposed to a first side of an aircraft fuselage 130 may be configured to rotating in a first direction, whereas the first propulsor rotor 28 for each propulsion unit 22 disposed to a second side of the aircraft fuselage 130 may be configured to rotating in a second direction opposite to the first direction. In other embodiments, the propulsion units 22 may be configured to corotate. For example, the first propulsor rotors 28 for the propulsion units 22 disposed to both sides of the aircraft fuselage 130 may be configured to rotate in a common (the same) direction.

In some embodiments, referring to FIGS. 4-6, each of the propulsion units 22 may be arranged with and mounted to a respective aircraft wing 132. Each aircraft wing 132, for example, may carry one or more of the propulsion units 22.

In some embodiments, referring to FIGS. 4 and 5, the power unit 128 and its members 24 and/or 26 may be arranged with and mounted to an airframe structure other than the aircraft wing(s) 132 to which the propulsion unit(s) 22 is/are arranged. The power unit 128 and its members 24 and/or 26 of FIGS. 4 and 5, for example, are arranged with and mounted to the aircraft fuselage 130. More particularly, the power unit 128 and its members 24 and/or 26 may be housed within (and/or mounted to an exterior of) the aircraft fuselage 130. In other embodiments however, referring to FIG. 6, the power unit 128 and its members 24 and/or 26 and the propulsion unit(s) 22 may be arranged and mounted with a common (the same) airframe structure. The power unit 128 and its members 24 and/or 26 of FIG. 6, for example, are arranged with and mounted to the same respective aircraft wing 132 as its associated (e.g., electrically coupled) propulsion unit(s) 22. More particularly, the power unit 128 and its members 24 and/or 26 may be disposed laterally between and spaced from its associated propulsion units 22 along a span of the respective aircraft wing 132. The present disclosure, however, is not limited to such an exemplary arrangement. For example, in other embodiments, all associated propulsion units 22 may be disposed to a common lateral side of the power unit 128 and its members 24 and/or 26 along the span of the respective aircraft wing 132.

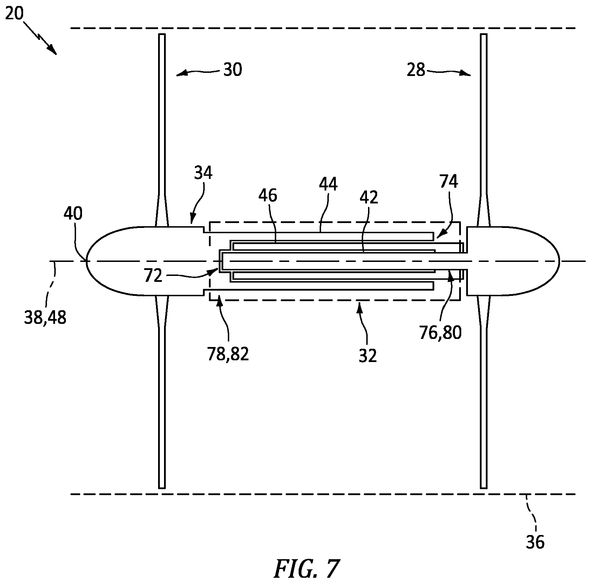

In some embodiments, referring to FIG. 1, the propulsor rotors 28 and 30 may be arranged to a common end (e.g., a forward, upstream end, or an aft, downstream end) of a respective propulsion unit 22. In other embodiments however, referring to FIG. 7, the propulsor rotors 28 and 30 may arranged at different ends of the respective propulsion unit 22. The first propulsor rotor 28 of FIG. 7, for example, may be arranged at the downstream end of the respective propulsion unit 22, and the second propulsor rotor 30 may be arranged at the upstream end of the respective propulsion unit 22. Of course, in other embodiments, the positions of the propulsor rotors 28 and 30 may be reversed.

The electric machine 32 is described above as a radial flux electric machine. **It is** contemplated, however, the electric machine 32 may alternatively be configured as an axial flux electric machine or a transverse flux electric machine.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An aircraft system (20) comprising:
a fuselage (130);
a wing (132) connected to and projecting out from the fuselage (130);
a plurality of propulsion units (22) mounted to the wing, each of the plurality of propulsion units (22) including:
a first propulsor rotor (28) rotatable about an axis (38);
a second propulsor rotor (30) rotatable about the axis (38);
a first motor (72) coupled to and configured to drive rotation of the first propulsor rotor (28); and
a second motor (74) coupled to and configured to drive rotation of the second propulsor rotor (30); and
a power source (24) mounted to the wing (132) and electrically coupled to the first motor (72) and the second motor (74) of each of the plurality of propulsion units (22), and the power source (24) spaced from a first of the plurality of propulsion units (22) spanwise along the wing (132).

2. The aircraft system (20) of claim 1, wherein:
the first motor (72) is configured to drive rotation of the first propulsor rotor (28) in a first direction about the axis (38); and
the second motor (74) is configured to drive rotation of the second propulsor rotor (30) in a second direction about the axis (38) that is opposite to the first direction.

3. The aircraft system (20) of claim 1, wherein:
the first motor (72) is configured to drive rotation of the first propulsor rotor (28) in a first direction about the axis (38); and
the second motor (74) is configured to drive rotation of the second propulsor rotor (30) in the first direction about the axis (38).

4. The aircraft system (20) of any preceding claim, wherein the power source (24) comprises one or more power storage devices (86).

5. The aircraft system (20) of any preceding claim, wherein the power source (24) comprises one or more electrical generators.

6. The aircraft system (20) of any preceding claim, further comprising a powerplant (26) configured to power the first motor (72) and the second motor (74) of each of the plurality of propulsion units (22), the powerplant (26) mounted to the aircraft wing (132).

7. The aircraft system of claim 6, wherein the powerplant is configured as or otherwise includes a thermal engine.

8. The aircraft system (20) of any preceding claim, wherein the first propulsor rotor (28) is a first un-ducted rotor, and the second propulsor rotor (30) is a second un-ducted rotor.

9. The aircraft system (20) of any of claims 1 to 7, wherein the first propulsor rotor (28) is a first ducted rotor, and the second propulsor rotor (30) is a second ducted rotor.

10. An aircraft system (20), comprising:
a first propulsor rotor (28) rotatable about an axis (38);
a second propulsor rotor (30) rotatable about the axis (38); and
an electric machine (32) including a first electric machine rotor (42), a second electric machine rotor (44) and an electric machine stator (46) radially between the first electric machine rotor (42) and the second electric machine rotor (44);
the first electric machine rotor (42) rotatable about the axis (38) and rotatably connected to the first propulsor rotor (28), and the first electric machine rotor (42) and the electric machine stator (46) forming a first motor (72) configured to drive rotation of the first propulsor rotor (28); and
the second electric machine rotor (44) rotatable about the axis (38) and rotatably connected to the second propulsor rotor (30), and the second electric machine rotor (44) and the electric machine stator (46) forming a second motor (74) configured to drive rotation of the second propulsor rotor (30),
wherein the system further comprises:
a first propulsion unit (22) including the first propulsor rotor (28), the second propulsor rotor (30) and the electric machine (32);
a second propulsion unit (22) discrete from the first propulsion unit (22), the second propulsion unit (22) comprising a second electric machine (32);
a power source (24) electrically coupled to the electric machine (32) and the second electric machine (32), the power source (24) configured to power the first propulsion unit (22) and the second propulsion unit (22); and
an aircraft wing (132),
wherein the first propulsion unit (22), second propulsion unit (22), and power source (24) are mounted to the same aircraft wing (132), and the power source (24) is disposed laterally between and spaced from the first propulsion unit (22) and the second propulsion unit (22) along a span of the aircraft wing (132).

11. The aircraft system (20) of claim 10, wherein:
the electric machine stator (46) circumscribes the first electric machine rotor (42); and
the second electric machine rotor (44) circumscribes the electric machine stator (46).

12. The aircraft system (20) of claim 10 or 11, wherein the second propulsor rotor (30) is arranged axially between the first propulsor rotor (28) and the electric machine (32).

13. The aircraft system (20) of claim 10 or 11, wherein the second propulsor rotor (30) is arranged axially between the first propulsor rotor (28) and the first motor (72).

14. The aircraft system (20) of any of claims 10 to 13, wherein the electric machine stator (46) extends axially along the first electric machine rotor (42) and the second electric machine rotor (44).

15. The aircraft system (20) of any of claims 10 to 14, wherein the second electric machine rotor (44) axially overlaps the first electric machine rotor (42).
